# EUROPEAN PATENT SPECIFICATION

(11) **EP 2 421 326 B1**
(45) Date of publication and mention of the grant of the patent: **20.04.2016**
(21) Application number: 10821587.2
(22) Date of filing: 25.09.2010
(51) Int. Cl.: H04W 4/00, H04W 4/08, H04W 8/18

(54) **METHOD AND APPARATUS FOR ACQUIRING MACHINE TYPE COMMUNICATION DEVICE GROUP IDENTIFICATION**
VERFAHREN UND VORRICHTUNG ZUR ERFASSUNG VON GRUPPENIDENTIFIKATIONEN IN EINER KOMMUNIKATIONSMASCHINE
PROCÉDÉ ET APPAREIL DESTINÉS À OBTENIR L'IDENTIFICATION D'UN GROUPE DE DISPOSITIFS DE COMMUNICATION DE TYPE MACHINE

(30) Priority: 10.10.2009 CN 200910205850
(43) Date of publication of application: 22.02.2012
(73) Proprietor: ZTE Corporation, Shenzhen, Guangdong 518057 (CN)
(72) Inventor: QU, Aiyan, Shenzhen Guangdong 518057 (CN); LI, Zhijun, Shenzhen Guangdong 518057 (CN); ZONG, Zaifeng, Shenzhen Guangdong 518057 (CN)
(74) Representative: V.O.
(86) International application number: PCT/CN2010/077292
(87) International publication number: WO 2011/041978

(56) References cited:
- WO-A1-2009/045007
- CN-A- 1 963 780
- CN-A- 101 216 897
- US-A1- 2007 106 897
- US-A1- 2009 217 348
- "3rd Generation Partnership Project; Technical Specification Group Services and System Aspects; Study on Facilitating Machine to Machine Communication in 3GPP Systems; (Release 8)", 3GPP STANDARD; 3GPP TR 22.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 March 2007 (2007-03-01), pages 1-15, XP050361381,
- "3rd Generation Partnership Project; Technical Specification Group Services and System Aspects; Feasibility Study on the Security Aspects of Remote Provisioning and Change of Subscription for M2M Equipment; (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.5.0, 1 July 2009 (2009-07-01), pages 1-87, XP050380630,

## Description

### Field of the Invention

The present invention relates to the communication field, and in particular to a method and an apparatus for acquiring machine type communication device group identification.

### Background of the Invention

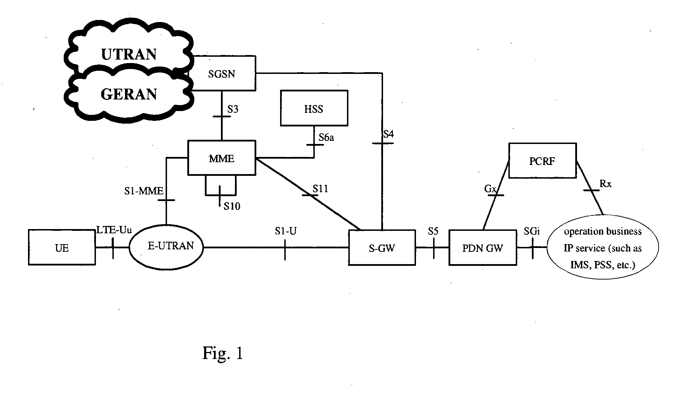

Fig. 1 is a schematic structural diagram of Evolved Packet System (EPS) according to the related art. As shown in Fig. 1, the EPS of the 3rd Generation Partnership Project (3GPP) is consisted of Evolved Universal Terrestrial Radio Access Network (E-UTRAN), Mobility Management Entity (MME), Serving Gateway (S-GW), Packet Data Network Gateway (P-GW or PDN GW), Home Subscriber Server (abbreviated as HSS), Policy and Charging Rules Function (PCRF), Serving General Packet Radio Service (GPRS) Supporting Node (SGSN) and other supporting nodes, wherein the core network part is referred to as Evolved Packet Core (EPC).

In Fig. 1, the MME is responsible for relevant operations of the control panel such as the mobility management, the process of non-access layer signaling, and the management of the context in user mobile management, etc. The S-GW is an access gateway device connected to the E-UTRAN, forwards data between the E-UTRAN and the P-GW, and is responsible for caching the paging waiting data. The P-GW is a border gateway between the EPS and the Packet Data Network (PDN) and responsible for carrying on the functions such as the access of PDN, forwarding data between the EPS and the PDN and so on. The PCRF is connected to the Internet Protocol (IP) service network via a receiving interface Rx and acquires service information, and in addition, the PCRF can further be connected to the gateway devices in the network via an interface Gx, with the PCRF responsible for initiating the establishment of the IP bear, ensuring the Quality of Service (QoS) of the service data, and performing charging control. The SGSN is an important part of the core network packet domain device in Universal Mobile Telecommunications System (UTMS) or Global System for Mobile communications (GSM) and mainly fulfills the functions such as routing and forwarding, mobility management, session management, logic link management, authentication and encryption, call list generation and output, etc. Universal Terrestrial Radio Access Network (UTRAN) and GSM(GPRS)/EDGE (Enhanced Data Rate for GSM Evolution) Radio Access Network (abbreviated as GERAN) can access to the EPS by a SGSN access gateway device.

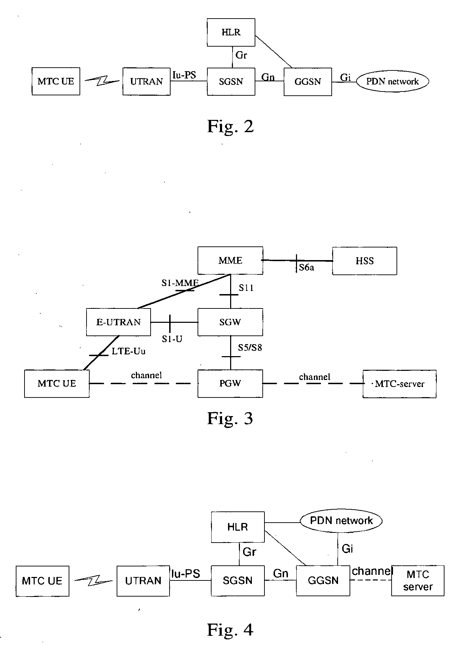

Fig. 2 is a system structural diagram of UTMS according to related art. The UTMS network is consisted of Universal Terrestrial Radio Access Network (UTRAN), SGSN, Gateway GPRS Support Node (GGSN), and Home Location Register (HLR).

In Fig. 2, the SGSN has the functions of routing and forwarding the terminals data packets of this SGSN serving area and has functions such as performing mobility management on the terminals and the like. The GGSN provides the routing and encapsulation of the data packets between the GPRS network and the external data networks. The PDN is a network providing services for users. The HLR is used for storing user subscription data. The SGSN and the UTRAN communicate with each other using an Iu-PS interface, and the SGSN uses this interface to perform the communication with the UTRAN system and the terminals so as to fulfill the functions such as packet data transmission, mobility management and session management. Between the SGSN and the GGSN, the functions such as establishment, release, control of the IP channel and so on are fulfilled via an interface Gn. The SGSN obtains data of the terminals from the HLR via an interface Gr, wherein the HLR stores the GPRS user data and routing information. An interface Gi is an interface between the GPRS and the external PDN. The GPRS is interconnected with various public packet networks (such as Internet or Integrated Services Digital Network (ISDN)) via an interface Gi. At the interface Gi, the operations such as the encapsulation/de-encapsulation of protocols, address conversion (such as converting private network IP addresses into public network IP addresses), authentication and certification when users access, etc. need to be performed. As the narrow sense, Machine To Machine (M2M) means the communication from a machine to a machine. While the broad sense, it means network application and serving with a core of machine terminal intelligent interaction. The M2M is based on the intelligent machine terminals, provides informatization solutions for customers by access means of various communication modes, and is used for meeting the informatization requirements of the customers in terms of monitoring, commanding and scheduling, data acquisition and measurement, etc.

The development of wireless technology is an important factor of the development of M2M market. Additionally, the increasingly increased requirements promote M2M to constantly develop. What is contrary to the continuous increase of the information processing ability and network bandwidth is the far lagged means of acquiring information, while M2M meets the requirements of people well, through which people can monitor the external environment in real time and achieve automated information acquisition across a large range.

The communication objects of M2M are "machine to machine" and "man to machine". The data communication among one or more machines is defined as Machine Type Communication (MTC), in which relatively little man-machine interaction is required the machine joining the MTC is defined as a MTC device. The MTC device is the terminal of a MTC user and can communicate with MTC devices and MTC servers via Public Land Mobile Network (PLMN). The MTC User Equipment (MTC UE) is a function block attached to the MTC device, wherein the function block is used for accessing the MTC device to the EPS system. Fig. 3 is a schematic diagram illustrating an MTC UE accessing to EPS via EUTRAN according to related art. Fig. 4 is a schematic diagram illustrating an MTC UE accessing to UTMS via UTRAN according to related art.

The MTC devices are mostly devices of specific applications, for example, automated meter reading and life detection use different devices, etc. The MTC devices with different applications have different features, and therefore the grouping of MTC devices can perform management, monitoring, paying, etc. on the MTC devices effectively. The MTC device group identification identifies the classification of the MTC devices, and the EPS system can determine the attribute of this MTC device group according to this identification. For example, lifter devices such as elevators and the like have low mobility and Packet Switched (PS) only attributes, while the monitoring and alarm devices further have the attributes such as low data transmission and high availability and the like besides low mobility and PS only. However, in related art, it is only described that the MTC device group identification is used for identifying the classification of the MTC devices, but whether this identification is needed to be transmitted in the network is not disclosed.

The document "3rd Generation Partnership Project; Technical Specification Group Services and System Aspects; Study of Facilitating Machine to Machine communication in 3GPP Systems" 3GPP TR 22.868 (EPO reference XP050361381) discloses distribution of subscription information including a the machine class/terminal type identifier to responsible network elements handling M2M communication. However neither the specific source and destinations of this information nor the timing of the distribution is disclosed.

A similar disclosure is made in "3rd Generation Partnership Project; Technical Specification Group Services and System Aspects; Feasibility Study of the Security Aspects of Remote Provisioning and Change of Subscription for M2M Equipment" 3GPP TR 33.812 (EPO reference XP050380630)".

US2009/217348, which refers to the latter document, discloses association of a "generic" wireless device, i.e., a device that is not pre-programmed with subscription credentials corresponding to a particular operator, with a Home Operator designated by the device's owner. The document also discloses automatic linking of a newly activated M2M device to an appropriate server for downloading subscription credentials.

WO2009/045007 discloses establishment of a connection by a home node by means of an "attachment request" message to an operation and maintenance center. Furthermore information as the radio resource management can be exchanged between two home nodes.

### Summary of the Invention

The main objective of the present invention is to provide a solution for acquiring MTC device group identification so as to solve at least one of the above problems.

In order to achieve the above objective, one aspect of the present invention is to provide a method for acquiring MTC device group identification.

The method for acquiring MTC device group identification according to the present invention comprises: acquiring the MTC device group identification from a user database by a mobility management network element after the user database has subscribed to the MTC device group identification.

Preferably, acquiring the MTC device group identification by the mobility management network element includes:, downloading the MTC device group identification from the user database through a location updated message by the mobility management network element when a MTC device is attached to the mobility management network element.

Preferably, downloading the MTC device group identification from the user database by the mobility management network element includes: sending the location updated message to the user database by the mobility management network element; receiving a location updated response message from the user database by the mobility management network element, wherein the location updated response message carries the MTC device group identification.

Preferably, acquiring the MTC device group identification by the mobility management network element further includes: receiving a message for updating the MTC device group identification in the mobility management network element from the user database by the mobility management network element when the MTC device group identification stored in the user database changes.

Preferably, receiving the message for updating the MTC device group identification in the mobility management network element from the user database by the mobility management network element includes: receiving an inserting subscription data message from the user database by the mobility management network element, wherein the inserting subscription data message carries the MTC device group identification.

Another aspect of the present invention is to provide an apparatus for acquiring machine type communication (MTC) device group identification.

The apparatus for acquiring MTC device group identification according to the present invention comprises: an acquiring module for acquiring the MTC device group identification from a user database after the user database has subscribed to the MTC device group identification.

Preferably, the acquiring module includes: a downloading module for downloading the MTC device group identification from the user database through a location updated message when the MTC device is attached to the apparatus.

Preferably, the downloading module includes: a sending unit for sending a location updated message to the user database; and a receiving unit for receiving a location updated response message from the user database, wherein the location updated response message carries the MTC device group identification.

Preferably, the acquiring module further includes: a receiving module for receiving a message for updating the MTC device group identification in the apparatus from the user database when the MTC device group identification stored in the user database changes.

Preferably, the receiving module is in particular used for receiving an inserting subscription data message from the user database, wherein the inserting subscription data message carries the MTC device group identification.

With the present invention, the manner of acquiring the MTC device group identification from the user database is used to solve the transmission problem of the MTC device group identification in the network in related art so as to enable the mobility management network element to acquire the group identification and select different QoS according to the group identification to establish different types of default bears.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is a schematic structural diagram of EPS according to related art;
Fig. 2 is a system structural diagram of the UTMS according to related art;
Fig. 3 is a schematic diagram of an MTC UE accessing to EPS via EUTRAN according to related art;
Fig. 4 is a schematic diagram of an MTC UE accessing to UTMS via UTRAN according to related art;
Fig. 5 is a flow chart of a method of the MME for acquiring the MTC device group identification in the EPS system according to Embodiment I in the embodiments of the present invention;
Fig. 6 is a flow chart of a method of the SGSN for acquiring the MTC device group identification in the UTMS system according to Embodiment II in the embodiments of the present invention;
Fig. 7 is a flow chart of a method of a user database for updating the MTC device group identification of a mobility management network element according to Embodiment III in the embodiments of the present invention; and
Fig. 8 is a structural block diagram of an apparatus for acquiring the MTC device group identification according to an embodiment of the present invention.

### Detailed Description of Embodiments

It needs to be noted that the embodiments of the present application and the features in the embodiments can be combined with each other if no conflict exists. The present invention will be described hereinafter in detail with reference to the drawing and in conjunction with the embodiments.

In the following embodiments, the steps shown in the flow charts of the drawings can be performed in a computer system such as a set of computer executable instructions. Although the logical orders are shown in the flow charts, the steps shown or described here can be in some circumstances performed in other orders different from the logical orders here.

In related art, neither how the MTC device group identification is transmitted in the network nor how a network element device should acquire this identification is disclosed. In the following embodiments, a user database subscribes to the MTC device group identification, wherein this identification can be transmitted to a mobility management network element, and subsequently the mobility management network element can select different QoS according to this identification and establish different types of default bears. That is, the following embodiments provide a method for acquiring MTC device group identification. The method comprises the steps as follows: after a user database subscribes to the MTC device group identification, a mobility management network element acquires the MTC device group identification from the user database. The mobility management network element can select different QoS according to the group identification and establish different types of default bears, through the following embodiments.

Preferably, the mobility management network element acquiring the MTC device group identification includes the following two modes.

### Mode I

When an MTC device is attached to a mobility management network element, this mobility management network element downloads the MTC device group identification from the user database through a location updated message.

### Mode II

When the MTC device group identification stored in the user database changes, the user database initiates the updating for the user group identification in the mobility management network element, and subsequently this mobility management network element receives from this user database a message for updating the MTC device group identification in this mobility management network element.

In the mode I, the mobility management network element downloading the MTC device group identification from the user database includes the steps as follows: the mobility management network element sends a location updating message to the user database; and subsequently the mobility management network element receives a location-updating response message from the user database, wherein the location-updating response message carries the MTC device group identification.

In the mode II, the mobility management network element receiving from the user database a message for updating the MTC device group identification in the mobility management network element includes the steps as follows: the mobility management network element receives an inserting subscription data message from the user database, wherein the inserting subscription data message carries the MTC device group identification.

In this case, the user database includes but not limited to: HSS or HLR; and the mobility management network element includes: MME or SGSN.

Hereinafter, the description will be made in detail in conjunction with the preferred embodiments.

### Embodiment I

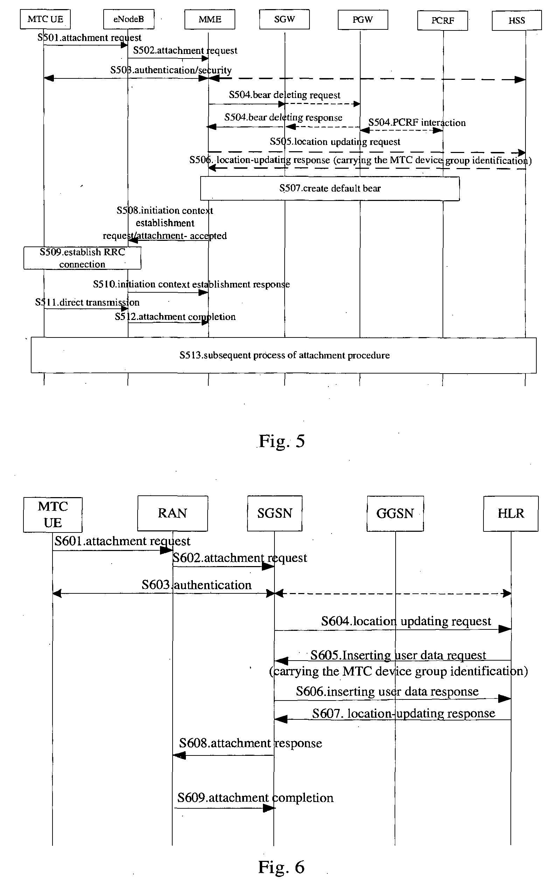

In the EPS system, when an MTC UE is attached, the HSS issues the work flow chart of the MTC device group identification (MTC Group ID). The HSS subscribes to the Group ID and subsequently the HSS issues the Group ID to the MME during the attachment process. Fig. 5 is a flow chart of a method of the MME for acquiring MTC device group identification in the EPS system according to Embodiment I in the embodiments of the present invention. As shown in Fig. 5, this method comprises the following steps 501 to 513:
Step 501: an MTC UE initiates an attachment request message to an Evolved Node B (eNodeB);
Step 502: the eNodeB deduces the MME according to Globally Unique Temporary Identity (GUTI), and if it cannot directly deduce the MME, then it can select the MME through the "MME selecting function" and forward the attachment message to a new MME;
Step 503: if there is no MTC UE context in the network, then the system will initiate authentication, otherwise this step is optional;
Step 504: if there is bear context activated by the MTC UE in the MME, for example, the MTC UE is attached again to the same MME without being de-attached beforehand, then it needs to delete the corresponding bear of the original MME from the S-GW and P-GW;
Step 505: if the MME changes or is attached for the first time, then the MME sends a location updating message to the HSS;
Step 506: the HSS sends a location-updating response message to the MME, wherein the location-updating response message carries the MTC device group identification;
Step 507: a default bear is created, and the default bear can be created flexibly according to the MTC device group identification during the creation process of the default bear;
Step 508: the MME sends an attachment-accepted message to the eNodeB, and if the MME allocates a new GUTI to the User Equipment (UE), the new GUTI also can be transmitted to the eNodeB through this attachment-accepted message;
Step 509: the MTC UE establishes Radio Resource Control (RRC) connection with the eNodeB;
Step 510: the eNodeB sends an initiation context establishment response to the MME;
Step 511: the MTC UE sends a direct transmission message to the eNodeB, wherein the direct transmission information contains an attachment completion message;
Step 512: the attachment of the MTC UE is completed; and
Step 513: the subsequent process of the attachment procedure of the MTC UE is completed.

### Embodiment II

In the UTMS system, when an MTC UE is attached, the HLR issues the work flow chart of the MTC device group identification (MTC Group ID). The HLR subscribes to the Group ID and subsequently the HLR issues the Group ID to the MME during the attachment process. Fig. 6 is a flow chart of a method of SGSN for acquiring MTC device group identification in the UTMS system according to embodiment II of the embodiments of the present invention. As shown in Fig. 6, this method comprises the following steps 601 to 609:
Step 601: a MTC UE initiates an attachment request through a Residue Number System (RNS), wherein the attachment request carries such parameters as attachment type, IMSI, etc.;
Step 602: the RNS routes according to its load condition this message to the SGSN by taking the International Mobile Subscriber Identity (IMSI) of the users as the request identification;
Step 603: the SGSN downloads an authentication certification parameters from the HLR and performs authentication and certification on the MTC UE;
Step 604: the SGSN sends a location updating request to the HLR, wherein the location updating request carries such parameters as SGSN number and address, IMSI, etc.;
Step 605: the HLR downloads the subscription data corresponding to the IMSI and sends it to the SGSN, wherein the subscription data carries the group identification of the MTC devices;
Step 606: the SGSN performs access control check on the MTC UE to check whether there is area limit or access limit, and subsequently returns an inserting data response to the HLR;
Step 607: the HLR confirms the location updating message and sends a location-updating response to the SGSN, and if the location-updating request is rejected by the HLR, then the SGSN will reject the attachment request of the MTC UE;
Step 608: the SGSN allocates Packet Temperate Mobile subscriber Identify (P-TMSI) to this user and subsequently sends an attachment-accepted message to the MTC UE, wherein the attachment-accepted message carries information such as the P-TMSI allocated by the MTC UE; and
Step 609: if the P-TMSI is updated, then the MS returns an attachment completion message to the SGSN to confirm the completion of the GPRS attachment procedure.

### Embodiment III

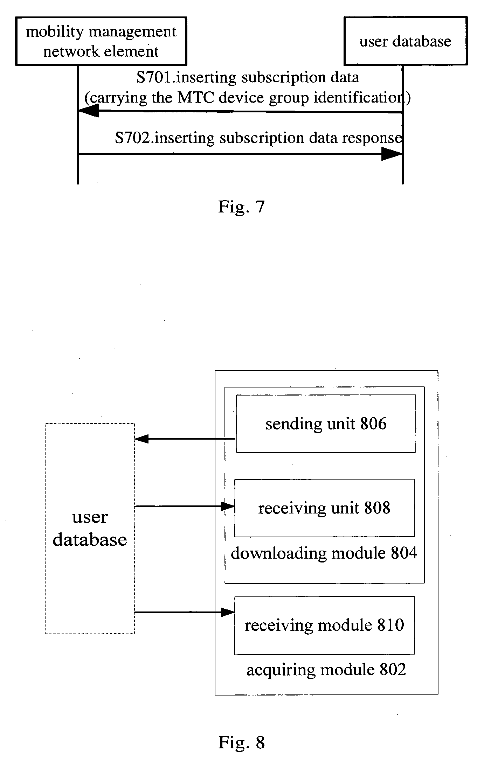

If the MTC device group identification in the user database changes, then the MTC device group identification in the mobility management network element is updated. Fig. 7 is a flow chart of a method for acquiring MTC device group identification according to Embodiment III in the embodiments of the present invention, which in particular includes the following steps 701 to 702:
Step 701: the user database sends an inserting subscription data message to the mobility management network element, wherein the inserting subscription data message carries the MTC device group identification; and
Step 702: the mobility management network element sends an inserting subscription data response message to the user database.

An apparatus for acquiring MTC device group identification is provided in another embodiment. This apparatus comprises: an acquiring module **802** for acquiring the MTC device group identification from a user database after the user database subscribes to the MTC device group identification.

Fig. 8 is a structural block diagram of an apparatus for acquiring MTC device group identification according to an embodiment of the present invention. As shown in Fig. 8, the acquiring module **802** includes: a downloading module **804** for downloading the MTC device group identification from the user database through a location updating message when the MTC device is attached to the apparatus.

In this case, the downloading module **804** includes: a sending unit **806** for sending a location updating message to the user database; and a receiving unit **808** for receiving a location-updating response message from the user database, wherein the location-updating response message carries the MTC device group identification.

The acquiring module **802** further includes: a receiving module **810** for receiving from the user database a message for updating the MTC device group identification in the apparatus when the MTC device group identification stored in the user database changes.

In this case, the receiving module **810** is in particular used for receiving an inserting subscription data message from the user database, wherein the inserting subscription data message carries the MTC device group identification.

It needs to be noted that the apparatus for acquiring the MTC device group identification described in the apparatus embodiment is corresponding to the above method embodiments, the specific implementing method of which has been described in detail in the method embodiments, which will not be described here redundantly.

In summary, the mobility management network element can select different QoS according to the group identification and establish different types of default bears through the above embodiments.

Obviously, those skilled in the art should understand that the above-mentioned modules and steps of the present invention can be implemented by using general-purpose computing devices and they can be integrated into a single computing device or distributed on a network consisted of a plurality of computing devices, and optionally, they can be implemented using computing device executable program codes. Therefore, they can be executed by computing devices by storing them in a storage device, or they can be made into each integrated circuit module respectively or a plurality of modules or steps thereof are made into one integrated circuit module. Thus, the present invention is not restricted to the combination of any specific hardware and software.

Above description is only to illustrate the preferred embodiments but not to limit the present invention. Various alternations and changes to the present invention are apparent to those skilled in the art. The protection scope defined in the present invention shall comprise any modifications, equivalent substitutions and improvements within the principle of the present invention.

## Claims

1. A method for acquiring Machine Type Communication (MTC) device group identification, **characterized by** comprising:
acquiring the MTC device group identification from a user database by a mobility management network element after the user database subscribes to the MTC device group identification; and
selecting different QoS according to the MTC device group identification to establish different types of bears;
wherein the step of acquiring the MTC device group identification by the mobility management network element comprises:
downloading, by the mobility management network element, the MTC device group identification from the user database through a location updating message when the MTC device is attached to the mobility management network element.

2. The method according to claim 1, **characterized in that** the step of downloading by the mobility management network element the MTC device group identification from the user database comprises:
sending the location updating message to the user database by the mobility management network element; and
receiving a location-updating response message from the user database by the mobility management network element, wherein the location updating response message carries the MTC device group identification.

3. The method according to claim 1, **characterized in that** the step of acquiring the MTC device group identification by the mobility management network element further comprises:
receiving, by the mobility management network element, a message for updating the MTC device group identification in the mobility management network element from the user database when the MTC device group identification stored in the user database changes.

4. The method according to claim 3, **characterized in that** the step of receiving by the mobility management network element the message for updating the MTC device group identification in the mobility management network element from the user database comprises:
receiving an inserting subscription data message from the user database by the mobility management network element, wherein the inserting subscription data message carries the MTC device group identification.

5. An apparatus for acquiring Machine Type Communication (MTC) device group identification, **characterized by** comprising:
an acquiring module for acquiring the MTC device group identification from a user database after the user database subscribes to the MTC device group identification; and
selecting different QoS according to the MTC device group identification to establish different types of bears
wherein the acquiring module further comprises a downloading module for downloading the MTC device group identification from the user database through a location updating message when the MTC device is attached to the apparatus.

6. The apparatus according to claim 5, **characterized in that** the downloading module comprises:
a sending unit for sending the location updating message to the user database; and
a receiving unit for receiving a location-updating response message from the user database, wherein the location-updating response message carries the MTC device group identification.

7. The apparatus according to claim 5, **characterized in that** the acquiring module further comprises:
a receiving module for receiving from the user database a message for updating the MTC device group identification in the apparatus when the MTC device group identification stored in the user database changes.

8. The apparatus according to claim 7, **characterized in that** the receiving module is used for receiving an inserting subscription data message from the user database, wherein the inserting subscription data message carries the MTC device group identification.

## Patentansprüche

1. Verfahren zur Erfassung von Gruppenidentifikationen in einer Kommunikationsmaschine (MTC, engl. Machine Type Communication), das Verfahren **dadurch gekennzeichnet, dass** es Folgendes umfasst:
Erfassen der MTC-Gruppenidentifikationen von einer Benutzerdatenbank durch ein Mobilitätsmanagementnetzelement, nachdem der Benutzer die MTC-Gruppenidentifikationen abonniert; und
Auswählen verschiedener QoS entsprechend der MTC-Gruppenidentifikationen, um verschiedene Arten von Peilungen zu erstellen;
wobei der Schritt des Erfassens der MTC-Gruppenidentifikationen durch das Mobilitätsmanagementnetzelement umfasst, dass:
das Mobilitätsmanagementnetzelement die MTC-Gruppenidentifikationen von der Benutzerdatenbank durch eine Standortaktualisierungsnachricht herunterlädt, wenn die MTC-Vorrichtung an das Mobilitätsmanagementnetzelement angeschlossen ist.

2. Verfahren nach Anspruch 1, **dadurch gekennzeichnet, dass** der Schritt des Herunterladens der MTC-Gruppenidentifikationen von der Benutzerdatenbank durch das Mobilitätsmanagementnetzelement umfasst, dass:
das Mobilitätsmanagementnetzelement die Standortaktualisierungsnachricht an die Benutzerdatenbank sendet; und
das Mobilitätsmanagementnetzelement eine Standortaktualisierungsantwortnachricht von der Benutzerdatenbank empfängt, wobei die Standortaktualisierungsantwortnachricht die MTC-Gruppenidentifikationen enthält.

3. Verfahren nach Anspruch 1, **dadurch gekennzeichnet, dass** der Schritt des Erfassens der MTC-Gruppenidentifikationen durch das Mobilitätsmanagementnetzelement ferner umfasst, dass:
das Mobilitätsmanagementnetzelement eine Nachricht empfängt, um die MTC-Gruppenidentifikationen in dem Mobilitätsmanagementnetzelement von der Benutzerdatenbank zu aktualisieren, wenn sich die in der Benutzerdatenbank gespeicherten MTC-Gruppenidentifikationen ändern.

4. Verfahren nach Anspruch 3, **dadurch gekennzeichnet, dass** der Schritt, in dem das Mobilitätsmanagementnetzelement die Nachricht zur Aktualisierung der MTC-Gruppenidentifikationen in dem Mobilitätsmanagementnetzelement von der Benutzerdatenbank empfängt, umfasst, dass:
das Mobilitätsmanagementnetzelement eine Nachricht zum Einsetzen von Abonnementdaten von der Benutzerdatenbank empfängt, wobei die Nachricht zum Einsetzen von Abonnementdaten die MTC-Gruppenidentifikationen enthält.

5. Vorrichtung zur Erfassung von Gruppenidentifikationen in einer Kommunikationsmaschine (MTC, engl. Machine Type Communication), **dadurch gekennzeichnet, dass** die Vorrichtung Folgendes umfasst:
ein Erfassungsmodul zur Erfassung der MTC-Gruppenidentifikationen von einer Benutzerdatenbank, nachdem die Benutzerdatenbank die MTC-Gruppenidentifikationen abonniert; und
Auswählen verschiedener QoS entsprechend der MTC-Gruppenidentifikationen, um verschiedene Arten von Peilungen zu erstellen,
wobei das Erfassungsmodul ferner ein Herunterlademodul zum Herunterladen der MTC-Gruppenidentifikationen von der Benutzerdatenbank durch eine Standortaktualisierungsnachricht umfasst, wenn die MTC-Maschine an die Vorrichtung angeschlossen ist.

6. Vorrichtung nach Anspruch 5, **dadurch gekennzeichnet, dass** das Herunterlademodul umfasst:
eine Sendeeinheit zum Senden der Standortaktualisierungsnachricht an die Benutzerdatenbank; und
eine Empfangseinheit zum Empfangen einer Standortaktualisierungsantwortnachricht von der Benutzerdatenbank, wobei die Standortaktualisierungsantwortnachricht die MTC-Gruppenidentifikationen enthält.

7. Vorrichtung nach Anspruch 5, **dadurch gekennzeichnet, dass** das Erfassungsmodul ferner umfasst:
ein Empfangsmodul zum Empfangen einer Nachricht von der Benutzerdatenbank zu Aktualisierung der MTC-Gruppenidentifikationen in der Vorrichtung, wenn sich die in der Benutzerdatenbank gespeicherten MTC-Gruppenidentifikationen ändern.

8. Vorrichtung nach Anspruch 7, **dadurch gekennzeichnet, dass** das Empfangsmodul verwendet wird, um eine Nachricht zum Einsetzen von Abonnementdaten von der Benutzerdatenbank empfängt, wobei die Nachricht zum Einsetzen von Abonnementdaten die MTC-Gruppenidentifikationen enthält.

## Revendications

1. Méthode pour acquérir une identification de groupe de dispositifs de Communication de Type Machine (MTC), **caractérisée en ce qu'**elle comprend :
l'acquisition de l'identification de groupe de dispositifs MTC à partir d'une base de données d'utilisateur par un élément de réseau de gestion de mobilité après que la base de données d'utilisateur s'abonne à l'identification de groupe de dispositifs MTC ; et
la sélection d'une QoS différente selon l'identification de groupe de dispositifs MTC pour établir différents types de supports ;
dans laquelle l'étape d'acquisition de l'identification de groupe de dispositifs MTC par l'élément de réseau de gestion de mobilité comprend :
le téléchargement, par l'élément de réseau de gestion de mobilité, de l'identification de groupe de dispositifs MTC à partir de la base de données d'utilisateur par l'intermédiaire d'un message de mise à jour de localisation lorsque le dispositif MTC est rattaché à l'élément de réseau de gestion de mobilité.

2. Méthode selon la revendication 1, **caractérisée en ce que** l'étape de téléchargement par l'élément de réseau de gestion de mobilité de l'identification de groupe de dispositifs MTC à partir de la base de données d'utilisateur comprend :
l'envoi du message de mise à jour de localisation à la base de données d'utilisateur par l'élément de réseau de gestion de mobilité ; et
la réception d'un message de réponse de mise à jour de localisation en provenance de la base de données d'utilisateur par l'élément de réseau de gestion de mobilité, dans laquelle le message de réponse de mise à jour de localisation porte l'identification de groupe de dispositifs MTC.

3. Méthode selon la revendication 1, **caractérisée en ce que** l'étape d'acquisition de l'identification de groupe de dispositifs MTC par l'élément de réseau de gestion de mobilité comprend en outre :
la réception, par l'élément de réseau de gestion de mobilité, d'un message pour mettre à jour l'identification de groupe de dispositifs MTC dans l'élément de réseau de gestion de mobilité en provenance de la base de données d'utilisateur lorsque l'identification de groupe de dispositifs MTC stockée dans la base de données d'utilisateur change.

4. Méthode selon la revendication 3, **caractérisée en ce que** l'étape de réception par l'élément de réseau de gestion de mobilité du message pour mettre à jour l'identification de groupe de dispositifs MTC dans l'élément de réseau de gestion de mobilité en provenance de la base de données d'utilisateur comprend :
la réception d'un message de données d'abonnement d'insertion en provenance de la base de données d'utilisateur par l'élément de réseau de gestion de mobilité, dans laquelle le message de données d'abonnement d'insertion porte l'identification de groupe de dispositifs MTC.

5. Appareil pour acquérir une identification de groupe de dispositifs de Communication de Type Machine (MTC), **caractérisé en ce qu'**il comprend :
un module d'acquisition pour acquérir l'identification de groupe de dispositifs MTC à partir d'une base de données d'utilisateur après que la base de données d'utilisateur s'abonne à l'identification de groupe de dispositifs MTC ; et
la sélection d'une QoS différente selon l'identification de groupe de dispositifs MTC pour établir différents types de supports ;
dans lequel le module d'acquisition comprend en outre un module de téléchargement pour télécharger l'identification de groupe de dispositifs MTC à partir de la base de données d'utilisateur par l'intermédiaire d'un message de mise à jour de localisation lorsque le dispositif MTC est rattaché à l'appareil.

6. Appareil selon la revendication 5, **caractérisé en ce que** le module de téléchargement comprend :
une unité d'envoi pour envoyer le message de mise à jour de localisation à la base de données d'utilisateur ; et
une unité de réception pour recevoir un message de réponse de mise à jour de localisation en provenance de la base de données d'utilisateur, dans lequel le message de réponse de mise à jour de localisation porte l'identification de groupe de dispositifs MTC.

7. Appareil selon la revendication 5, **caractérisé en ce que** le module d'acquisition comprend en outre :
un module de réception pour recevoir en provenance de la base de données d'utilisateur un message pour mettre à jour l'identification de groupe de dispositifs MTC dans l'appareil lorsque l'identification de groupe de dispositifs MTC stockée dans la base de données d'utilisateur change.

8. Appareil selon la revendication 7, **caractérisé en ce que** le module de réception est utilisé pour recevoir un message de données d'abonnement d'insertion en provenance de la base de données d'utilisateur, dans lequel le message de données d'abonnement d'insertion porte l'identification de groupe de dispositifs MTC.
